# EUROPEAN PATENT SPECIFICATION

(11) **EP 2 172 734 B1**
(45) Date of publication and mention of the grant of the patent: **12.10.2011**
(21) Application number: 09252024.6
(22) Date of filing: 19.08.2009
(51) Int. Cl.: F42B 12/34, F42B 12/74

(54) **Artificial bird projectiles for simulating bird strike events**
Künstliche Vogelgeschosse zur Simulation von Vogelschlagereignissen
Projectiles d'oiseaux artificiels pour simuler des événements d'attaque d'oiseaux

(30) Priority: 01.10.2008 GB 0817855
(43) Date of publication of application: 07.04.2010
(73) Proprietor: Rolls-Royce plc, London SW1E 6AT (GB)
(72) Inventor: Turner, Jeremy Nicholas, Nottingham, NG16 1RH (GB); Reed, Julian Mark, Derby, DE23 3XG (GB); Thompson, Ewan Fergus, Derby, DE65 6SA (GB)
(74) Representative: Gee, Philip David

(56) References cited:
- FR-A- 1 484 155
- US-B1- 6 298 841
- GEORGIADIS S ET AL: "Bird-strike simulation for certification of the Boeing 787 composite moveable trailing edge" COMPOSITE STRUCTURES, [Online] vol. 86, pages 258-268, XP002550586 ISSN: 0263-8223 Retrieved from the Internet: URL:http://www.sciencedirect.com/science?_ ob=MImg&_imagekey=B6TWP-4S2MJ0H F-15&_cdi=5568&_user=987766&_orig=search&_ coverDate=11%2F30%2F2008&_ sk=999139998&view=c&wchp=dGLzVzz-zSkzS&md5 =4dfc940728e0ec2290463e4ffe 8aa050&ie=/sdarticle.pdf> [retrieved on 2009-10-14]

## Description

The present invention relates to artificial bird projectiles for simulating bird strike events, and particularly but not exclusively to projectiles for simulating bird impact with aircraft.

Aircraft and engines have to undergo rigorous testing to demonstrate safe operation in the event of a bird strike event.

For example, an article in the journal *Composite Structures* describes a typical methodology for designing an aircraft structure to resist bird strike damage and for verifying its performance (GEORGIADIS S et al.: "Birdstrike simulation for certification of the Boeing 787 composite moveable trailing edge" COMPOSITE STRUCTURES, vol. 86, pages 258-268, ISSN: 0263-8223).

Artificial bird materials have been used for many years as a convenient substitute for real birds. When used for testing they avoid the variability and health issues associated with real birds.

Over the years various materials have been used. Amongst these are bags of wet rags and solidified mixtures of gelatine and water. The former have been found to work reasonably satisfactorily when the bird break-up is limited, such as during an impact with an aircraft main structure. The latter tend to be used in situations where the bird is sliced, such as during an impact with a rotating fan blade.

Current artificial bird designs have some limitations. The gelatine mixtures have to be reasonably strong in order to allow them to be handled and fired or projected into the target. This can be achieved by mixing a significant amount of gelatine with hot water, and allowing the mixture to set, so that the resulting gel is sufficiently stiff, strong and stable to allow it to be fired at speeds representative of flight conditions. A disadvantage is that the gel tends to have a rubbery consistency, which does not totally mimic the behaviour of a real bird. The high level of elasticity can cause the gel to bounce on impact, something a real bird would not do. The wet rag approach is also not ideal because the material has too high a tensile strength and hence cannot be sliced by a rotating blade.

An aim of the present invention is to provide an artificial bird projectile for simulating bird strike events that can be sliced by a rotating blade, but does not bounce on impact, and thus mimics the behaviour of real birds more closely.

Thus, a first aspect of the invention may provide an artificial bird projectile for simulating a bird strike event, the projectile having a solid foam phase and a gel or liquid phase, wherein said foam phase supports the gel and/or liquid phase(s).

By including a solid foam phase in the projectile, it is possible to use a liquid or relatively weak gel phase, while providing the projectile with the strength, stiffness and stability required to allow it to be fired at speeds representative of flight conditions. Thus, the problems associated with rubbery or elastic gels may be avoided.

Furthermore, the foam phase may allow the projectile to be attached more easily to the test apparatus, since the foam provides a more mechanically stable site for attachment of rods, strings or threads to the projectile than a weaker gel phase. Rods can be used to align the projectile during firing or to add a rifling to the projectile movement. Threads or strings can be used to suspend or control the descent of the simulated bird into a test area, where for instance the suspended simulated bird can be impacted by a moving structure (e.g. a fan blade).

Preferably, the foam is a polymeric foam, such as a phenolic foam. Typically, the foam has an open-cell structure. The foam may be a rigid or semi-flexible foam. If a gel is used, it is preferable, for environmental reasons, that it should be an aqueous gel. If a liquid is used, it is desirable that it should be a water-based liquid. These features allow a projectile to be provided that has a density close to that of real birds.

Preferably, the projectile comprises a gel phase. The greater viscosity of a gel compared to a liquid results in impact behaviour of the projectile that is a closer match for that of a real bird.

The gel phase may be at least partly absorbed within the foam phase and held there by capillary action. This arrangement provides a high level of reinforcement of the gel by the foam. The gel phase may be entirely absorbed within the foam.

Alternatively, the foam may be embedded within a larger gel mass, which may be partly absorbed into the foam. This arrangement provides weaker mechanical support of the gel by the foam and may be tailored to mimic the mechanical properties of a real bird as closely as possible. For example, the foam phase may be arranged within the projectile so as to simulate the position of at least a portion of the skeleton of a bird. Several discrete elements of the foam phase may be provided within the projectile, and these elements may be arranged so as to reproduce the most important features of a bird skeleton. Likewise it is possible to use a thicker gel on the outer layer or surface of the foam to prevent fluid escape, particularly where the test environment is less predictable, such as in outdoor testing at full scale.

The projectile may be configured to be suitable for simulating a bird strike event on an aero gas turbine engine.

The projectile is preferably suitable for loading into a gun, such as a gas gun, for firing at a target. The projectile may be housed within a sabot, which may facilitate the loading of the projectile into a gun, and may also help the projectile to attain higher velocities.

A further aspect of the invention provides a gun, such as a gas gun, loaded with the projectile.

Another aspect of the invention provides a method of simulating a bird strike event comprising firing a projectile according to the first aspect of the invention at a target. Preferably the target is a component of an aero gas turbine engine.

Embodiments of the present invention will now be described in more detail.

The present invention relates to projectiles for use in simulating bird strike events. The projectiles have a composite structure comprising a first phase that is a foam and a second phase that is either a gel or a liquid. There may also be a third phase of gel or liquid.

The foam phase is typically a polymeric foam. Phenolic resin foam, polyurethane foam, polyester sponge, and urea-formaldehyde foam resin may all be suitable. Preferably, the foam is phenolic resin foam.

The foam may have an open cell structure to allow liquid to be drawn into the pores by capillary action. The porosity of the foam may be over 70%, preferably over 80%.

For projectiles comprising a foam and a gel, the gel is preferably an aqueous gel. The gelling agent may be selected from the following list: gelatine, agar, carrageenan, pectin, konnyaku, locust bean gum, alginates, gellan gum, hypromellose, hydroxypropyl methyl cellulose, xanthan gum, and starch. Preferably, the gelling agent is gelatine.

The gel may be entirely absorbed within the foam. Alternatively, the foam may be located within a larger gel mass. Alternatively, the outer surface or layer of the foam may have a containment or restraining function preferably provided by a thicker gel or thin coating.

For projectiles comprising a foam and a liquid, the liquid is typically water-based or has a similar density to water. The liquid may simply be water. The liquid is typically entirely absorbed within the foam, and is held within the foam by capillary action.

The projectiles may be of a range of shapes and sizes. Typically, however, the projectiles will be of a suitable size for firing from a gas gun. Thus, they may be cylindrical, with a diameter representative of the soft body they are replicating (from sparrow to Albatross).

In a preferred embodiment of the invention, the projectile is a phenolic rigid foam cylinder containing an absorbed gelatine/water mixture. The cylinder may be solid or hollow. A hollow cylinder may additionally contain the gelatine/water mixture in its central cavity.

While the invention has been described in conjunction with the exemplary embodiments described above, many equivalent modifications and variations will be apparent to those skilled in the art when given this disclosure. Such as using changes in temperature to control the stiffness and density of the whole. Accordingly, the exemplary embodiments of the invention set forth above are considered to be illustrative and not limiting. Various changes to the described embodiments may be made without departing from the scope of the invention.

## Claims

1. An artificial bird projectile for simulating a bird strike event, the projectile having a solid foam phase and a gel or liquid phase, wherein said foam phase supports said gel or liquid phase.

2. A projectile according to claim 1 having the gel phase, wherein said gel phase is at least partly absorbed within said foam phase.

3. A projectile according to claim 1 or claim 2, wherein said foam phase is a polymeric foam.

4. A projectile according to any of the preceding claims, the projectile having a plurality of discrete elements of said foam phase.

5. A projectile according to any of the preceding claims having the gel phase, wherein said gel phase is an aqueous gel.

6. A projectile according to any of the proceding claims wherein there is a tertiary gel or liquid phase.

7. A method of simulating a bird strike event comprising firing a projectile according to any one of the preceding claims at a target.

8. The method according to claim 7, wherein said target is a component of an aero gas turbine engine.

## Patentansprüche

1. Künstliches Vogelgeschoss zur Simulation eines Vogelschlag-Ereignisses, wobei das Geschoss eine feste Schaumphase und ein Gel oder eine flüssige Phase aufweist, wobei die Schaumphase das Gel oder die flüssige Phase trägt.

2. Geschoss nach Anspruch 1, das die Gel-Phase aufweist, wobei die Gel-Phase zumindest teilweise in der Schaum-Phase absorbiert ist.

3. Geschoss nach Anspruch 1 oder 2, bei dem die Schaum-Phase ein Polymer-Schaum ist.

4. Geschoss nach einem der vorhergehenden Ansprüche, bei das Geschoss eine Anzahl von diskreten Elementen der Schaum-Phase hat.

5. Geschoss nach einem der vorhergehenden Ansprüche, das die Gel-Phase aufweist, wobei die Gel-Phase ein wässriges Gel ist.

6. Geschoss nach einem der vorhergehenden Ansprüche, bei dem ein tertiäres Gel oder eine flüssige Phase vorgesehen ist.

7. Verfahren zum Simulieren eines Vogelschlag-Ereignisses, dass das Abfeuern eines Geschosses nach einem der vorhergehenden Ansprüche auf ein Ziel umfasst.

8. Verfahren nach Anspruch 7, bei dem das Ziel eine Komponente eines Luftfahrzeug-Gasturbinentriebwerkes ist.

## Revendications

1. Projectile d'oiseau artificiel pour simuler un événement de collision avec un oiseau, le projectile ayant une phase mousse solide et une phase gel ou liquide, dans lequel ladite phase mousse supporte ladite phase gel ou liquide.

2. Projectile selon la revendication 1 ayant la phase gel, dans lequel ladite phase gel est au moins partiellement absorbée dans ladite phase mousse.

3. Projectile selon la revendication 1 ou la revendication 2, dans lequel ladite phase mousse est une mousse polymérique.

4. Projectile selon l'une quelconque des revendications précédentes, le projectile ayant une pluralité d'éléments discrets de ladite phase mousse.

5. Projectile selon l'une quelconque des revendications précédentes ayant la phase gel, dans lequel ladite phase gel est un gel aqueux.

6. Projectile selon l'une quelconque des revendications précédentes, dans lequel il y a une phase gel ou liquide tertiaire.

7. Procédé de simulation d'un événement de collision avec un oiseau comprenant le lancement d'un projectile selon l'une quelconque des revendications précédentes vers une cible.

8. Procédé selon la revendication 7, dans lequel ladite cible est un composant d'un moteur à turbine à gaz d'avion.
